Europäisches Patentamt

European Patent Office

Office européen des brevets

(19)

(11) Publication number: **0 421 415 A1**

## EUROPEAN PATENT APPLICATION

(21) Application number: **90119024.9**

(22) Date of filing: **04.10.90**

(51) Int. Cl.⁵: **C08L 101/00, C08L 23/04, A01G 13/02**

(30) Priority: **05.10.89 FI 894734**

(43) Date of publication of application:
**10.04.91 Bulletin 91/15**

(84) Designated Contracting States:
**AT BE CH DE DK FR GB IT LI NL SE**

(71) Applicant: **BIODATA OY**
**Läkkisepätie 21**
**SF-00620 Helsinki(FI)**

(72) Inventor: **Suominen, Hannu Lauri**
**Pallokuja 4 as. 14**
**SF-01280 Vantaa(FI)**

(74) Representative: **Bühling, Gerhard, Dipl.-Chem.**
**et al**
**Patentanwaltsbüro Tiedtke-Bühling-Kinne**
**Grupe-Pellmann-Grams-Struif Bavariaring 4**
**W-8000 München 2(DE)**

(54) **Biologically degradable cover film and method of preparation the same.**

(57) Method of preparing a biologically degradable film, which film consists of synthetic polymer and biologically degradable polymer. In the method small particles are made from said biologically degradable polymer in a water suspension by means of enzymes that split and release small molecyles from the surface of the biopolymer particles. When the wished particle size is achieved, vegetable oil is emulgated in the system and the particles coated with enzyme protein obtained in the step a) are coated with vegetable oil at the same time as the act of degradation of the biopolymer particles by the enzymes are interrupted. The particles coated with oil obtained in the foregoing stages are separated from the suspension to remove small molecyles after which the particles are redried and thereafter pulverized. The final film is preparated in a film extruder in which the biopolymer is mixed with the synthetic polymer and other additives that generally are used in a film.

EP 0 421 415 A1

# BIOLOGICALLY DEGRADABLE COVER FILM AND METHOD OF PREPARATION THE SAME

The invention is concerned with a method of preparing a biologically degradable cover film, which film consists of synthetic polymers and biological material.

The invention is also concerned with a biologically degradable cover film that consists of a synthetic polymer and biological material.

It is known to grow plants in greenhouses, the covers of which have been prepared of glass or plastic. A clear cover can be penetrated by both short wave and long wave radiation in the range of the visual light. It is known that the covers of the greenhouses transmit more short wave radiation than long wave radiation. Thus, the heating effect of the light in the greenhouses takes place so that the short wave radiation is conversed to long wave radiation inside the greenhouse.

The principal of the greenhouse has in earlier known ways been used on the fields in such a way that the covers have been formed to a bow above the surface of the field or so that the cover has been applicated on the surface of the earth. The cover materials in these applications on the fields have been plastic or paper through which the plants are growing. With this known technic the following advantages have been achieved: the temperature has increased by using transmitting covers so that the short wave radiation has been conversed to heat. The evaporation of the water can be prevented also by using paper covers. Furthermore, by using a film that transmits light, the growing of weeds under the cover has been hindered.

The need of weed-killers have been the same by using clear covers as by growing without any cover, in some cases even more, because by using a clear cover the humidity is concendated on the inside of the film and thus good conditions are formed for the growth of weeds around the plants to be growed. Furthermore, the fact that the earth is exposed between the films (the earth terracing used to fasten the film), causes that the growing conditions for weed are improved.

The previously known films have often been decomposed to small pieces by the effect of ultraviolet radiation. It has been tried to achieve such films that by means of ultraviolet radiation should be degraded so far that micro organisms should be able to continue the degradation and to degrade the films finally. The degradation has however, in these previously known film solutions, not been complete. In the practice, the edge of the cover film covered by the earth retains in the field because the UV-radiation cannot transmit the earth to degrade the film. Even a little piece of earth or a dust layer on the film hinders the energy, that degrades the polymer bonds, of the UV-light to enter the film. In the theory, the films are degraded by means of UV-light also after that the plants begin to cover them, to such small pieces that they do not cause problems in the field. In the practice, the degradation is not complete by the act of the UV-light, which results in more and more plastic material in the field because the synthetic polymer itself in the so called composite films is not degraded biologically. The synthetic polymers do not absorb water and as the biological degradation is taken place by means of the enzymes produced by microbes, no biological degradation can occur because the enzymes only act in the presence of water.

Synthetic polymers, the molecyles of which consists of for example about 12000 successive carbon atoms should be degraded to about 500 pieces with lengths of some ten carbon atoms before the rate of the biological degradation has any importance. However, the structure of the plastic films will be essentially changed already in the stage wherein the polymer has been degraded to pieces containing thousands of carbon atoms. A plastic film, degraded in this way, might cause serious nature problems. Because of this, the use of films of this type has been decreased recently. Problems have also arised from the toxic rests that possibly are caused by the degradation.

Also such methods are previously known in which the film is taken away frcm the field after that the growing season has come to the end. The use of such films is however very expensive. Furthermore, in previously known methods, there has mainly been used very thin films, because the preparation of these is cheaper. It is however, difficult to remove. such films from the field because the films are easily decomposed. In previously known solutions, the film has covered only about 50-70 % of the growing surface because it has been necessary to leave exposed earth between the films for the fastening terracing.

In the earlier application FI-891905 of the applicant, the degradation problem of the film has been improved so that the film is fastened to the surface to be growed by quiltings so that the whole growing surface is covered by the film. In the solution of the FI-application 891905 the degradation of the film by means of UV-light is improved because the whole film is on the ground. However, the problem is still that even of a UV-degradable film is used, more and more plastic is retained in the field, because the known films are not degraded biologically.

The biologically degradable materials can be degraded thanks to their chemical structure, by the act of micro organisms, as mushrooms and bacteria, when they are put to the earth or are in another way brought in contact with micro organisms, in conditions in which the microbes can grow. The term "biologically degradable" is here used for a degradation of the type in which the degradation is taken place by the act of living organisms as micro organisms. The term "degradable" is used when reference is made for example to the degradation of ethylene polymers which by the act of different additives or other substances can be degrade into pieces. No micro organisms is connected to a degradation of this type.

Attempts have been made to study the biological degradation of plastic films and even to show it in different ways, for example by means of mould cultures. (Compare with the ASTM-standard, STM G 21-70 1980, that has been used in the investigations of so called biological degradation of plastic materials). The growth of mould on plastic film has, how ever, not showed anything about the biological degradation in spite of the growing of the mould. The growth of mould on plastic films has been considered to be in correlation to the amounts of additives In the films but with no influence on the synthetic polymer itself.

Generally it can be stated that the film material is degraded into pieces if it does not contain antioxidants, but contains for example UV-catalysts, that cut the C-C bound of the synthetic polymer molecyle. If the plastic molecyles contain double bounds, these are degraded by less energy even without any catalyst.

The biological degradation of the synthetic material requires hydrophilic water soluble groups. The polymer must be cut so that such a hydrophilic chemical group is formed that can be degraded enzymatically, for example a carbonyl or carboxyle group. The degradation product of the biological degradation of the film must be water, carbon dioxide and biomass.

Several attemps have been made to prepare such biologically degradable films that consist of a combination of a synthetic polymer and a biopolymer in which generally a catalyst sensitive to UV-light has been added. A substance that degrades synthetic polymers by using light as catalyst is known for example from the patent publication EP-230 143.

It has been thought that the synthetic plastic material is able to absorb water if hydrophilic group are included in it by means of a biologically degradable polymer. Starch is the cheapest biologically degradable polymer for this intention, the use of which in addition to this should decrease the production costs of the film markable because its price has been lower than that of the polyethene. As the gelatinized starch alone forms a very brittle film, that is sensitive to water, it is commonly known that the starch must be combined with other substances that can be used in the film to get a satisfactory product. Polyethene (PE) is the most commonly used synthetic polymer for preparing films with wished physical properties. Earlier attemps to produce PE-films with blowing technic from compositions with a high proportion of starch > 30 % (w/w) have however not been succesful. The reason is that starch is a very coarse material (particle size 20-150 $\mu$m) that has been a hinder to make thin films. Furthermore, in the blowing technic, the starch particle and the melt plastic mass are moving with different speeds in a blowing technic that is carried out with normal blowing temperatures (170-200°C), why a brittle and breakable film material with holes is formed. In other words, it has not been possible to make such a film by blowing, as the film has become too thick.

Earlier, it has also been tried to bring chemical bonds around the starch particles to facilitate the mixing of the synthetic polymer. Such films has been described for example in the patent publications US-4 337 181, GB-1 487 050 and GB- 1 485 833. In these known films the enzymes can in theory degrade the material, because the material is at least in the theory wet to some extent. This is however, a very expensive technic and in spite of that the material has disadvantages: bad tensile strength, thick films must be made, the film does not stretch.

It has also been tried to add other reactive groups in the film material, for example dubble bonds. When the material contains dubble bonds and it reacts with oxygen and a metal catalyst (for example Fe3 + ), reactive peroxides -C-O-O-C- are formed. Thus, free oxygen atoms and radicals are formed by the act of which the bonds between the carbon atoms are degraded and for example carboxyle groups and cut carbon hydrogen chains are formed. This phenomena has been used in films that contain a metal catalyst (for example the patent publication EP-86 310 154.9). When the film material now contains carboxyle groups RCOOH, they can be degraded by the act of enzymes from the micro organisms if they are surrounded by water. In other words, reactive groups and catalysts have been added to the film material by means of which biologically degradable RCOOH- -groups are achieved in given conditions. Also these materials are expensive to make.

In the US-patent 4 337 181 starch, ethylene acryl acid copolymer and optionally polyethene have been mixed and blowed up to a film by using additives that neutralize a part of the functional acid groups of the copolymer. This method makes use of a wet starch possible, but requires expensive additives. According to the EP patent application 0 230 143, the photodegradation must be facilitated by using photo degradable substances that comprise a photo sensitive substance and an ethylene/carbon monoxide copolymer. Preferably, the photo sensible substance is a heavy metal dithiocarbamate or a heavy metal dithiophosphonate. As already was said, ethylene copolymers that contain carbonal groups, are degradable by means of ultraviolet light but the life time of those is not long enough.

Additionally, US patent 3 901 838 is mentioned as prior art and it comprises films that consist of a biologically degradable termoplastic polymer and a degradable ethylene polymer and the mixing is carried out in a conventional mixer and the powdering in a mill. From GB patent 1 483 838 such a biologically degradable film is known that comprises a biologically degradable substance that is homogenously dispersed in a material forming a non-biologically degradable film that is not dissolved in water, the biologically degradable substance being present in an amount of 40-60 percent of weight in the film material. In this solution the biologically degradable substance is a finely divided substance that absorbs water. In the solution of this patent, the film is made of an aqeuos dispersion of these substances. In this solution the film is in other words made from a dispersion in organic solvents or in water systems and because of the physical properties it is not usable as a growing film at all.

As a summary, it is furthermore stated that the degradation of cover films is a two-parted problem. On one hand they are desired not to be degraded as long as they are used. On the other hand, when the use of these is passed they should necessarily be returned to the ecosystem in a form that does not cause harms in the environment. Then the macromolecyles should be split into smaller compounds that in turn could be used as food for the orgasnisms and therethrough they should be returned to the food cycle. The major part of the commercial vinyl plastics, polyethylenes, polypropylenes, polystyrenes, polyvinyl chlorides and the aromatic polyesters stands the microbial degradation. The only polymers that are degraded biologically are far oxidated products as for instance derivatives of cellulose, alifatic polyesters and polyuretanes on polyester basis. As they can be degraded to water soluble short chains, they can be used as food by the microbes. Treatments that lower the molecyle wight and maybe also changes the chemical structure, exposes the polymers for the degradation action of the microbes. When for example polyethylene is acidified with nitrous acid, waxy compounds on which termophilic mushrooms can grow, are received. An intensive ultraviolet radiation also causes chemical changes in the plastics, as for example forming of carbonyl groups, which ketones are a part of the metabolism of the micro organisms.

UV-radiation, photo degradable additives, the morphological surface, additives, anti oxidants and the molecyle wight have thus an influence on the biological degradation of the polyethene. The biological degradation of paraffine can be compared with the degradation of polyethylene. In the beginning of the degradation, the main influing factor is the UV-light and/or oxidation agents, but once the carbonyl groups have been produced, the micro organisms attack those and degrade the polyethylene chain to shorter fractions, carbon dioxide and water being the end products. The biological decgradation and the ambient factors have a strong synergism, why the result never can be explained only by means of one factor because the degradation is a combined result of factors including the temperature, UV-light, water, the microbes and their food. The presence of water is always a condition for the biological degradation.

The object of this invention is a film, the degradation of which begins with the act of the UV-light and which film after this degradation also is degraded biologically, but which film in spite of that has the strength to stand one growing season to be degraded thereafter also biologically during the next growing season.

The object of the invention is, more in detail, a film that also is degraded by means of UV-light and bonds water and is thus also biologically degradable. The intention of the invention is a material that is degraded in two stages, first it is crumbled and when it is in the earth it is finally degraded biologically. The film must be mechanically so strong that it stands the application conditions and is degraded not later than during the following growing season, in other words, the final biological degradation is meant to happen not earlier than after the first growing season.

The object of the invention is more in detail such a biologically degradable film that is based on a synthetic polymer, for example a polyolefine, as polyethene or polypropene, and a biologically degradable polymer, for example starch or cellulose.

The object of the invention is furthermore to avoid the disadvantages of earlier materials that consist of biopolymer and synthetic polymer, in other words, a thick and brittle film, a too expensive preparation technic and an uncomplete or a too slow biological degradation.

To achieve the above mentioned intentions the method of the invention is mainly characterised in that the method comprises the following steps:

a) said biologically degradable polymer is divided into small particles in a water suspensions by means of enzymes that split and release compounds of small molecyles from the surface of the biopolymer particles,

b) when the desired particle size is achieved, vegetable based oil is emulgated in the system and the particles obtained in point a) that are coated with enzyme protein is coated with vegetable based oil at the same time as the degradation action of the enzyme is interrupted,

c) the particles coated with oil that are obtained in the previous steps are separated from the suspension to remove the small molecyles after which the particles will be predried and after that pulverized,

d) the final film is prepared in a film extruder in which the biopolymer is mixed with the synthetic polymer and with additives generally used in a film.

The plastic film of the invention is in turn mainly characterised in that
said biologically degradable polymer is homogenously distributed in the synthetic polymer in particle form,
there is a protein layer around said biologically degradable particles and an oil film that covers the protein layer.

The advantageous embodiments of the invention has the characteristics of the subclaims.

In the following, there is a detailed description of the invention that is not meant to restrict the invention.

The synthetic polymer to be used in the invention can be any olefine and its melting index is not a problem in itself. Both linear components, as LLDDPE, LDPE or HDPE or branched forms can be used. However, given properties are required for the polymers. For example, the synthetic and biologic material must fit, in other words, the biopolymer that is mixed with the synthetic polymer must be able to stand the melting temperature of the synthetic polymer in the preparation of the possibly used premixed preparate or masterbatch and in connection with blowing and drawing of the film. By means of the invention, the biopolymer can be homogenously distributed in the synthetic polymer, due to the small particle size and the way of coating. Furthermore, the polymer must not contain anti oxidants that prevent the degrading effect of the UV-light and the peroxides. The biopolymer to be used can be made of different starting materials for example, starch, cellulose, rye-flour, wheat flour and other biological materials that are milled. In earlier attempts to mix biopolymers with synthetic polymer, the particle size, that has been too big has caused problems and it has not been possible to make a chin film and in addition to that the big particles are difficult to mix in the melt mass. In the invention there are used such small particles (smaller than 10 $\mu$m), preferably 0,5-5 $\mu$m, that a film with a thickness of 20-40 can be prepared, in some cases even 10 $\mu$m. When the particle size is that small as in the invention, in the synthetic polymer film, there can easily be included 40 such biopolymer material that has not been modified chemically. Small particles like these can not be made in a previously known way by mills, in the invention there is instead used enzymes to make the biopolymer particles smaller. For example the a-amylase enzymes ($\alpha$-1,4-glucan-4-glucanhydrolase) split dextrines from starch, which gradually release from the bigger particles. If, for example cellulose is used, usable enzymes are the cellulases, for example 1,4-$\alpha$-D-glucanase, that split celludextrines or cellubiohydrolases from cellulose, their products being cellubios. In this way, the biopolymer can finally be degraded completely and dissolved in the water. When it is wished to degrade the biopolymer particles in the invention only to a given limit size, the process can simply be interrupted when the wished particle size has been achieved by adding the vegetable based oil and generally an emulgator to the suspension to be vigorously stirred. Then a vegetable based oil layer is formed on the enzyme protein on the surface of the particle, for example soya, rape or an other corresponding oil. A pure mixing of the biopolymer and the oil does not lead to the wished end result, but the biopolymer particles are dissolved in water and for example calcium chloride ($CaCl_2$) is added to the suspension so that the ionic strength is suitable for the enzyme and in the case of alfa-amylase, the concentration of $Ca^{2+}$ of the co-factor of the enzyme is suitable for the action of the alfa-amylase. Also the pH value of the suspension is regulated to be suitable for the action of the enzymes. According to the invention, it is advantageous to use an alfa-amylase whose activity depends on the temperature (for example high temperature alfa-amylase KLAA). The mixing of the biopolymer is first taking place in cold water, if starch is used, to prevent gelatinization and then the system is warmed to be suitable for the action of the enzyme that in the case of KLAA is about 55°C.

The whole process is carried out in a big reactor vessel in which there is a mixer surrounded by a mantle. The temperature is regulated in a known way for example by a termostate. Enzyme is added to the system and as its activity and other properties are given, the temperature, pH, and ionic strength of the mixture can be exactly regulated forwards and the time required for the degradation can be defined to achieve the desired particle size. The concentration of the enzyme is given to be able to quantatively cover the biopolymer particle and thus form a protein mantel on the particle. When the desired particle size is achieved, the oil is added by means of an emulgator to bring the oil in small droplets as a result of which the oil mantel is formed around the protein layer that surrounds the biopolymer particle, and the degradation process is stopped immediately as the oil prevents the action of the enzyme by isolating it from the water and by bonding it to the enzyme protein. A mantel of oil is collected around the protein mantel in the above presented way. The amount of the oil is about 0,5-15 % of the amount of the biopolymer, depending on the quality and mixing conditions of the biopolymer. In the stage in which the oil is added to the biopolymer-enzyme system, the mixture is further stirred vigorously, after which the temperature is decreased rapidly, preferably to a level under 10°C. Now the ready particles, coated with protein and oil, is wished to be separated from the suspension and from the small molecyles dissolved in the suspension in the first hand from the dextrine in case of starch and from lower sugars, why the mixture is stopped and the particles are separated from the suspension either by letting these precipitate or by centrifugating. From the view of the invention, it is extremely important that the obtained biopolymer particles are free from split products as otherwise big particles are reformed in the preparation of an optimal masterbach and during the preparation of the film and for example the dextrines are combusted in the preparing temperatures. The enzyme has for example split dextrines from starch to obtain small particles. The split dextrines must be removed from the mixture why the particles are centrifugated or decanted. As it is important that all of the dextrines are removed, the particles are washed with water before drying. Then they are pulverized and mixed with the other film material. The particles must be separated by decanting or centrifugation, whereat the water phase is removed, not directly by drying, because then aggregates of particles are formed that contain small molecyles, for example dextrines. After the separation the particles are dried from the suspension by for example spray drying. After the drying the particles are pulverized The pulverization is most preferably carried out by the so called FP method (a fine pulverization technology developed by Oy Finnpulva Ab, referance is made to their brochure). This method is carried out so that the particles are colleded in high pressure and in a little volyme rapidly against each other, they are in other words not pulverized mechanically. Air and the mixed material to be pulverized in this is lead via two notches to a collision line in a suitable angle. The temperature can be kept in a wished range why the material will be absolutely dry. In the invention it is however possible, even if not preferable, to carry out the pulverization also with other previously known methods, for example by mills. After the pulverization it is preferable to granulate the particles into granulates together with the synthetic polymer in a screw extruder. The granulates contain about 60-70 % biopolymer. These granulates form a so called masterbatch, or a premixed preparate, that contains biopolymer and synthetic polymer. A melt mass, coming out from the screw extruder, is split to pellets and cooled in an air stream. The pellets can also be cooled with water and thereafter be dried. A suitable synthetic polymer is for example polyethene. The granulation can not be carried out with any polymer, but this must have the right melting index depending on the biopolymer. These granulates form the premixed preparate of biopolymer and synthetic polymer.

If it is wished to include a catalyst in the film, also a second premixed preparate is made in granulate form that consists of a metal catalyst and a synthetic polymer that also is carried out in an extruder. The metal catalyst is for example anhydrous $FeCl_3$ and in this premix its concentration is 0,1-1 %. Other usable metal catalyst here are for example $Cu^{2+}$, $Se^{2+}$, $Zn^{2+}$, in other words known oxidation agents for vegetable based oils that are necessary for example to form carbonyl groups, when the C-C bonds are cut. The carbon chains can then be degraded biologically with the beginning from these groups.

The melting index of the used polymers is preferably about four, which means that the preparation temperature of the plastic film can be 150°. Because in the preferably embodiment there has been made own premixed preparates from both the catalyst and the biopolymer ("The Masterbatches") any real mixing is in this case not carried out inside the real film extruder any more, instead the premixes where already made in the foregoing extruder. It is also possible to carry out the real mixing as late as in the film extruder. If catalyst is used, it is preferably to keep it separate from the biopolymer as long as possible.

In the real film extruder the final film is then prepared by feeding in it, in the advantageous embodiment

a) a premix of catalyst (masterbatch I), that contains 0,1-1 % metal catalyst and synthetic polymer

b) a premix of polymer (masterbatch II), that contains 60-80 %, preferably about 60 %, biopolymer and synthetic polymer and

c) in addition and if so wished and depending on the case, furthermore for example 1-50 % synthetic polymers and additives can be added to the film extruder, for example pigments and other optic agents.

All those compounds that are wished to be present in the final film are mixed in the film extruder.

The transmission and absorbtion of the radiation of the film depends on the added particle amounts and the so called pigment components. Dye can be added, either by pressing it against the surface of the film or by mixing it with the film material. The degradation age of the final film is longer the less or the bigger particles are used and on the other hand the more oil or catalyst is used, the shorter degradation age.

The catalyst is kept separate until it is added to the film in an as late stage as possible, but generally it is added to the film because it is not sure that there is enough catalyst in the earth or that the degradation effect of the UV-light is sufficient. The material of invention is essentially dry until it will reach the earth. The amount and the size of the particles of the biopolymer are selected so that there are contacts between them so that they are able to absorb water, become wet and thus to be degraded by means of micro organisms. The film will not break in the required time when the proportional amounts of the biopolymer and the synthetic polymer are the right. If there are too much particles in the film material the strength properties become worse. By means of the invention a required amount of the biopolymer is homogenously included in the film, also in thin films so that it can be degraded biologically. The earth gets new nutritives when the film is degraded because all the additives are of good quality and act as earth improving agents when they are degraded. The cover film of the invention is an extremely advantageous film to be used in plant growing and it is degraded in the environment and the rate of degradation can be regulated after the use (1 month to 2 years). The strength of the film can be regulated to stand the application conditions by taking the bredth of the film, the fastening technic and the weather conditions into consideration. Also the particle size of the biological material is regulated after use.

The film of the invention can also be used as packing material.

The invention affords a new advantageous way to include reactive groups in film materials as the biological material is coated with chemically reactive material, with vegetable oil, the effect of which is directed to the carbon-carbon bonds of the polymer and the coatings of the particles of the invention have an positive infuence on their mixing properties with synthetic polymers.

In the use, the layer of the film that absorbs light best, is placed against the surface of the earth and the whole film is fastened on the surface of the substrate. The rate and way of degradation of the film is regulated so that weeds do not have time to produce seeds during the growing season. The film is regulated to stand until the end of the growing season, and the degradation is proceeded via a "fragment form" that is harmless from the view of the harvesting. The final mouldering takes place in the beginning of the following growing season.

The variation possibilities of the film material of the invention are extremely extensive and it has several advantageous.

The film can very advantageously be used in connection with the method developed by us, in which the whole area of the growth surface is covered with the cover film, in which method the growth of the weed is prevented (Finnish patent application number 891906, "Kateviljelyssä käytettävä istutuskalvo ja mikrokasvihuone").

The film transmits light and the plant penetrates the film only at the sowing and setting time. The use of this raises the averige temperature of the growth and keep the moisture, at the same time as a forming of a temperature or humidity gradient in the earth is prevented. Under the film, the earth gets overgrown with grass, in other words, the biological activity increases and the comprimation of the earth is prevented. The uptaking of food by the plants is improved, the need of fertilization is decreased, ventilation occurs earlier and the yield is increased. The ability of the plants to stand diseases and their presurving properties are improved.

The cover film and the cover growing tehcnic developed by us form a new growing culture and the advantages of that is best used in connection with the application system developed by us. (Patent application number 891905, "Menetelmä ja laite kateviljelyssä käytettävän kalvon kiinnittämseksi").

In the following the patent claims are presented. The details of the invention can vary in the scope of the invention defined by the patent claims.

Method of preparing a biologically degradable film, which film consists of synthetic polymer and biologically degradable polymer. In the method small particles are made from said biologically degradable polymer in a water suspension by means of enzymes that split and release small molecyles from the surface of the biopolymer particles. When the wished particle size is achieved, vegetable oil is emulgated in the system and the particles coated with enzyme protein obtained in the step a) are coated with vegetable oil at the same time as the act of degradation of the biopolymer particles by the enzymes are interrupted. The particles coated with oil obtained in the foregoing stages are separated from the suspension to remove small molecyles after which the particles are redried and thereafter pulverized The

final film is prepared in a film extruder in which the biopolymer is mixed with the synthetic polymer and other additives that generally are used in a film.

## Claims

1. Method of preparing a biologically degradable film, which film consists of synthetic polymer and biologically degradable polymer, characterized in that the method comprises the following steps:

   a) small particles is made of said biologically degradable polymer in a water suspension by means of enzymes that split and release small molecyles from the surface of the biopolymer particles,

   b) when the wished particle size is achieved, vegetable oil is emulgated in the system and the particles coated with enzyme protein obtained in step a) will be coated with vegetable oil at the same time as the action of degradation of the biopolymer particles by the enzymes are interrupted,

   c) the particles coated with oil, obtained in the foregoing steps, are separated from the suspension to remove small molecyles after which the particles are predried and thereafter pulverized,

   d) the final film is prepared in a film extruder in which the biopolymer is mixed with the synthetic polymer and other additives that generally are used in a film.

2. Method of claim 1, characterized in that the final film is prepared by adding catalyst in it.

3. Method of claim 1 or 2, characterized in that the final film is prepared by feeding in it

   1) a premixed biopolymer, that has been made by granulating of the biopolymer particles obtained in step c) with synthetic polymer that forms the film material,

   2) possibly premixed catalyst that has been obtained by mixing the catalyst with synthetic polymer and

   3) possible additivies and possible more synthetic polymer.

4. Method of claim 1, characterized in that in step a) there is prepared particles with the size of 0,5-10 $\mu$m, preferably under 5 $\mu$m.

5. Method of claim 3, characterized in that the proportion of the biologically degradable polymer in step 1) is 60-80 %, preferably 60 %.

6. Method of any of claim 1-5, characterized in that the enzyme used in step a) is $\alpha$-amylase, that splits dextrines from starch, and preferably it is an enzyme, the action of which depends on the temperature, or endoglucanase that splits celludextrines from cellulose or cellubiohydrolase that splits cellubios from cellulose.

7. Method of any of claims 1-6, characterized in that the vegetable oil used in step b) is soya, rape or a corresponding oil.

8. Method of any of claims 1-7, characterized in that step c) is carried out by adding $CaCl_2$ into the water whereat the ionic strength, pH and $Ca^{2+}$ concentration become suitable for $\alpha$-amylase and then by heating the mixture to a temperature that is suitable for the enzyme after which oil is mixed in it by means of an emulgator.

9. Method of any of claims 1-8, characterized in that the pulverization of the particles in step c) is carried out so that the particles are collided with high speed against each other in heat to obtain an absolutely dry material.

10. Method of any of claims 3-9, characterized in that the granulation in step 1) is carried out by a screw extruder and there after by air drying.

11. Method of any of claims 1-10, characterized in that the melting index S.I. of the synthetic polymer = about 4.

12. Method of any of claims 2-11, characterized in that the catalyst used in step 2) is a known oxidant for vegetable oils for example $Fe^{3+}$, $Se^{+2}$, $Cu^{+2}$ or $Zn^{2+}$ in the amounts of 0,05-1 %, preferably

13. Method of any of claims 1-12, characterized in that the proportions of the componats in the final film are 0,01-0,1 % catalyst, 10-60 % biopolymer, preferably 40 % and 40-80 % synthetic polymer, preferably 60 %.

14. Biologically degradable film that consists of synthetic polymer and biologically degradable polymer, characterized in

that said biologically degradable polymer is homogenously distributed in the synthetic polymer in particle form,

that, around said biologically degradable particles, there is a protein film and then an oil film.

15. Film of claim 14, characterized in that the proportions of the biologically degradable polymer and the possible catalyst in the film material are sufficient so that a physical contact is formed between the particles and between the possible catalyst through the oil mantle.

16. Film of claims 14 or 15, characterized in that the thickness of the film is 10-80 $\mu$m.

17. Film of any of patent claims 14-16, characterized in that the particle size of the degradable polymer is less than 10 $\mu$m, preferably 0,05-5 $\mu$m and its amount in the film depending on the particle size is 10-60 %.

18. Film of any of claims 14-17, characterized in that the biologically degradable polymer is starch and the synthetic polymer has a melting index S.I. of about 4, for example polyethene (LDPE)

19. Film of any of claims 14-18, characterized in that the catalyst is for example $Fe^{3+}$, $Cu^{2+}$, $Se^{2+}$ or

$Zu^{2+}$ and the amount of it is 0,01-0,1 %.

20. Film of any of claims 14-19, **characterized** in that the substances in the film are 0,01-0,1 % catalyst, 10-60 %, preferably 40 %, biopolymer and 40-90 %, preferably 60 %, synthetic polymer.

**European Patent Office**

# EUROPEAN SEARCH REPORT

Application Number

**EP 90 11 9024**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | WO-A-8 910 381  (AMERPLAST OY)<br>* The whole document *<br>– – – | 1 | C 08 L<br>101/00<br>C 08 L 23/04<br>A 01 G 13/02 |
| P,Y | | 1-20 | |
| Y | WO-A-8 806 609  (AMROTEX AG)<br>* Page 1, lines 1-14; page 4, line 18 - page 5, line 14; page 6, line 13 - page 7, line 22; page 8, lines 5-7 *<br>– – – | 1-20 | |
| A | GB-A-2 029 836  (COLOROLL LTD)<br>* Page 1, lines 1-6,45-55,75-89 *<br>– – – | 1 | |
| A | GB-A-1 600 497  (COLOROLL LTD)<br>* Page 1, lines 9-11,45-73 *<br>– – – | 1 | |
| A | US-A-3 467 543  (A.D. CAMPBELL)<br>* Column 3, lines 27-36 *<br>– – – – – | 1 | |

|  |
|---|
| **TECHNICAL FIELDS SEARCHED (Int. Cl.5)** |
| C 08 L<br>C 08 J<br>C 08 K<br>A 01 G |

The present search report has been drawn up for all claims

| Place of search | Date of completion of search | Examiner |
|---|---|---|
| The Hague | 04 December 90 | MAZET J.-F. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document